# EUROPEAN PATENT SPECIFICATION

(11) **EP 3 838 926 B1**
(45) Date of publication and mention of the grant of the patent: **07.06.2023**
(21) Application number: 19850592.7
(22) Date of filing: 15.08.2019
(51) Int. Cl.: C08B 30/12, A23L 29/212, D21H 19/54, A23G 3/00, A23L 7/10, A23L 17/10, A23L 17/20, A23L 21/10, A23L 29/281

(54) **MODIFIED STARCH, USE THEREOF, AND METHOD FOR PRODUCING MODIFIED STARCH**
MODIFIZIERTE STÄRKE, IHRE VERWENDUNG UND VERFAHREN ZUR HERSTELLUNG VON MODIFIZIERTER STÄRKE
AMIDON MODIFIÉ, UTILISATION ASSOCIÉE, ET PROCÉDÉ DE PRODUCTION D'AMIDON MODIFIÉ

(30) Priority: 15.08.2018 JP 2018152906
(43) Date of publication of application: 23.06.2021
(73) Proprietor: Nihon Shokuhin Kako Co., Ltd., Tokyo 100-0005 (JP)
(72) Inventor: MURAMATSU, Daisuke, Fuji-shi, Shizuoka 417-8530 (JP); TAKEMOTO, Koki, Fuji-shi, Shizuoka 417-8530 (JP); MORIMOTO, Kazuki, Fuji-shi, Shizuoka 417-8530 (JP); TAKAGUCHI, Hitoshi, Fuji-shi, Shizuoka 417-8530 (JP)
(74) Representative: Dehns
(86) International application number: PCT/JP2019/032050
(87) International publication number: WO 2020/036215

(56) References cited:
- WO-A1-2009/110610
- JP-A- 2001 275 585
- JP-A- 2004 238 523
- JP-A- 2005 171 112
- US-A- 3 977 897
- US-A- 5 725 676
- US-A- 5 871 756
- US-A- 6 113 976

## Description

### TECHNICAL FIELD

The present invention relates to a modified starch, a use thereof, and a method for producing the modified starch.

### BACKGROUND ART

Techniques for processing starch and altering the nature thereof are divided broadly into three categories: enzyme processing, chemical processing, and physical processing. Of these categories, physical processing is characterized in that starch can be processed at lower cost and more easily than with enzyme processing, and there is less safety concern and a greater degree of legal freedom than with chemical processing.

There are a number of reported cases pertaining to a technique for adding a metal salt to a starch and applying heat, as one example of a method of physically processing a starch. For example, Patent Document 1 discloses a method for producing a moist-heat-treated starch in which a moist heat treatment is carried out by adding metal salts as moist heat treatment accelerators to a starchy material, the object being to make the moist heat treatment more efficient. Patent Document 2 discloses a method for producing a potato starch in which calcium chloride is added to a potato starch suspension in a pH range of approximately 6 to approximately 8, the objects being to raise the temperature at which highest potato starch viscosity is exhibited and to minimize viscosity decrease. Patent Document 3 discloses a method for producing a modified starch in which a wet mixture containing a starch, moisture, and a salt is heat-treated, the object being to provide a modified starch that, with exhibiting low-viscosity, impedes to occur non-reducing Maillard reactions and that can be widely utilized in the field of food.

### [Related Art Documents]

### [Patent Documents]

[Patent Document 1] Japanese Laid-Open Patent Application No. 06-145203
[Patent Document 2] Japanese Laid-Open Patent Application No. 07-196701
[Patent Document 3] Japanese Laid-Open Patent Application No. 2001-275585

### [Problems the Invention is Intended to Solve]

### DISCLOSURE OF THE INVENTION

Various physical properties are sought after in starches in accordance with the uses thereof. An object of the present invention is to easily and inexpensively provide a modified starch having a novel property, and to provide a use for the modified starch and a method for producing the modified starch.

### [Means for Solving the Aforementioned Problems]

The present inventors perfected the present invention as a result of earnest research intended to achieve the aforementioned object.

Specifically, the present invention according to a first aspect provides a modified starch of which a particle diameter distribution waveform exhibits a single peak, wherein a 10 mass% paste liquid of the modified starch has an RVA peak viscosity that is 5% or less of the RVA peak viscosity of an unmodified starch serving as a raw material, and the difference between the maximum particle diameter and the minimum particle diameter is 2 *µ*m or less.

In the modified starch of the present invention, the average particle diameter is preferably 1 *µ*m or less.

According to a second aspect of the present invention, there is provided a food additive comprising the modified starch described above.

According to a third aspect of the present invention, there is provided a food texture improvement agent comprising the modified starch described above.

According to a fourth aspect of the present invention, there is provided a base material for powderization comprising the modified starch described above.

According to a fifth aspect of the present invention, there is provided a binder additive comprising the modified starch described above.

According to a sixth aspect of the present invention, there is provided a paper-making additive comprising the modified starch described above.

According to a seventh aspect of the present invention, there is provided a building material additive comprising the modified starch described above.

According to an eighth aspect of the present invention, there is provided a method for producing a modified starch in which a halogenated salt is added to a starch and a modifying by heating treatment is performed, wherein the modifying by heating treatment is performed so that the obtained modified starch of which a particle diameter distribution waveform exhibits a single peak, a 10 mass% paste liquid of the obtained modified starch has an RVA peak viscosity that is 5% or less of the RVA peak viscosity of an unmodified starch serving as a raw material, and the difference between the maximum particle diameter and the minimum particle diameter is 2 *µ*m or less.

In the method for producing a modified starch of the present invention, the modifying by heating treatment is preferably performed so that the average particle diameter of the obtained modified starch is 1 *µ*m or less.

In the method for producing a modified starch of the present invention, 0.1-20 parts by mass of the halogenated salt are preferably added per 100 parts by mass of the starch.

In the method for producing a modified starch of the present invention, the halogenated salt is preferably one or more selected from the group consisting of iron chloride (II, III), calcium chloride, magnesium chloride, ammonium chloride, lithium chloride, sodium chloride, iron bromide (II, III), calcium bromide, magnesium bromide, ammonium bromide, lithium bromide, sodium bromide, iron iodide (II), calcium iodide, magnesium iodide, ammonium iodide, lithium iodide, and sodium iodide.

In the method for producing a modified starch of the present invention, the halogenated salt is preferably calcium chloride.

In the method for producing a modified starch of the present invention, the modifying by heating treatment is preferably performed at 50-200°C for 0.5 hours to 30 days.

Pregelatinization is also preferably performed after the modifying by heating treatment.

### [Effect of the Invention]

The modified starch provided by the present invention has the characteristics of being inexpensively and easily producible, having a low viscosity, and having a uniform particle diameter as a starch paste liquid. When the modified starch is added to food, the physical characteristics of the food can be improved. Specifically, the modified starch can exhibit a texture-improving effect when used, for example, to improve the sensation of melting in the mouth or improving smoothness. The modified starch can also be used as a base material for powderization and as raw material for binders, paper, building materials, and other chemical industrial products.

### BRIEF DESCRIPTION OF THE DRAWINGS

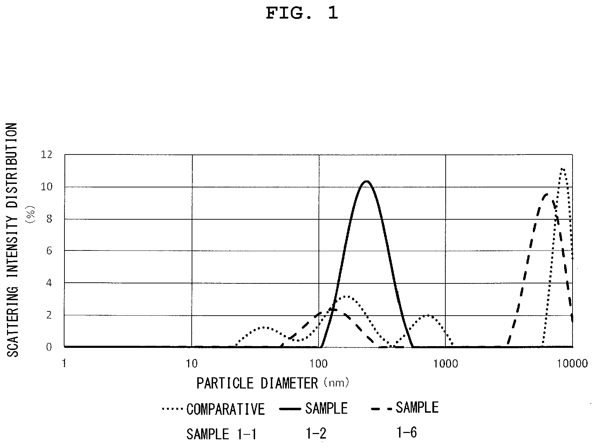

FIG. 1 is a chart of particle diameter distribution waveforms found in the starch samples in sample 1-2, sample 1-6, and comparative sample 1-1 (unmodified corn starch), evaluated in test example 1.

### BEST MODE FOR CARRYING OUT THE INVENTION

The present invention relates to a modified starch of which a particle diameter distribution waveform exhibits a single peak, wherein a 10 mass% paste liquid of the modified starch has an RVA peak viscosity that is 5% or less of the RVA peak viscosity of an unmodified starch serving as a raw material, and the difference between the maximum particle diameter and the minimum particle diameter is 2 *µ*m or less.

Specifically, a characteristic of the modified starch of the present invention is that the particle diameter distribution waveform exhibits a single peak. The term "particle diameter of the starch" used here refers to the particle diameter found when the particle diameter distribution of the paste liquid is measured. The term "particle diameter distribution waveform" refers to a histogram representing the ratio of particles found to be present for each particle diameter. The particle diameter distribution waveform can be measured, for example, in the following manner.

### (Particle diameter distribution waveform)

It is possible to prepare a dispersion by dispersing a paste liquid of a starch sample in water so that the solid concentration is 0.02 mass%, and to take measurements using, for example, ELSZ-2000ZS (Otsuka Electronics Co., Ltd.) or another dynamic light scattering measurement device. The particle diameter distribution waveform is calculated according to scattering intensity distribution. In the present invention, the particle diameter distribution waveform "exhibiting a single peak" means a state in which a peak value of a scattering intensity distribution is not present at a plurality of particle diameter values. As in the examples described below, there are cases in which even though a plurality of peaks are not confirmed, a plurality of peaks are clearly combined, such as the peaks being broad or shoulders being confirmed; such cases are not regarded as single peaks.

Another characteristic of the modified starch of the present invention is that a 10 mass% paste liquid of the modified starch has an RVA peak viscosity that is 5% or less of the peak viscosity of an unmodified starch serving as a raw material. In the present description, there are cases in which merely "peak viscosity ratio" is used to refer to the percentage (%) of the RVA peak viscosity in a 10 mass% paste liquid of modified starch when the RVA peak viscosity in a 10 mass% paste liquid of unmodified starch is designated as 100%. Additionally, when merely "peak viscosity" is used, it means this RVA peak viscosity. The RVA peak viscosity can be measured, for example, in the following manner.

### (RVA peak viscosity)

A starch sample is dispersed in water to 10 mass% to prepare 30 g, the dispersion is held for one minute at 50°C while being stirred with a paddle at a speed of 160 rpm, the temperature is continuously raised from 50°C to 95°C over a period of 3 min 42 sec, the temperature is held at 95°C for 2 min 30 sec, the dispersion is continuously cooled to 50°C over a period of 3 min 48 sec, and the temperature is held at 50°C for 2 min. The peak viscosity (highest viscosity) is measured under such conditions. The peak viscosity can be measured using a rapid visco analyzer (RVA), and a device manufactured by, for example, Perten Instruments can be used as the rapid visco analyzer (RVA).

Another characteristic of the modified starch of the present invention is that the difference between the maximum particle diameter and the minimum particle diameter is 2 *µ*m or less. The maximum particle diameter and minimum particle diameter can be measured using the same technique as is used to obtain the particle diameter distribution waveform.

More typically, a dispersion is prepared by using distilled water to dilute the paste liquid immediately after the measurement with the rapid visco analyzer (RVA) until the solid concentration is 0.02 mass%, and the dispersion is poured into a glass standard cell and analyzed using a dynamic light scattering measurement device (e.g., ELSZ-2000ZS (Otsuka Electronics Co., Ltd.)). The measurement can be carried out in a condition where the accumulation is 25 times and at room temperature, while using the values of solvent refractive index, viscosity, and dielectric constant for water.

The above-described measurements of the particle diameter distribution waveform, the RVA peak viscosity, the maximum particle diameter, and the minimum particle diameter, as well as the measurement of the average particle diameter described hereinafter can be applied to a modified starch that has been rinsed (washed) with water after the modifying treatment when a halogenated salt is used to prepare the modified starch, as shall be described hereinafter.

As described above, a characteristic of the modified starch of the present invention is that the starch is low in viscosity and has a uniform particle diameter, and this characteristic is believed to be the significant effect of improving the texture of food. Additionally, the modified starch of the present invention in some cases has the characteristic of the particle diameter in the starch paste liquid being extremely small at the nano level, in addition to having both of the previously described characteristics, and thereby exhibiting particularly significant performance, thus being preferable. For example, the modified starch of the present invention can have an average particle diameter of 1 *µ*m or less. The average particle diameter of the modified starch can be measured using the same technique as was used to obtain the particle diameter distribution waveform, the maximum particle diameter, and the minimum particle diameter; for example, the average particle diameter can be calculated by cumulant analysis.

There is no reason for a starch that has been pregelatinized or otherwise processed in particular to be excluded from the technical scope of the present invention. Specifically, the technical scope can include a modified starch of which the raw material is pregelatinized or otherwise processed starch, and a modified starch that has been pregelatinized or otherwise processed after preparation using a halogenated salt, etc., described hereinafter.

When used as a food material, the modified starch of the present invention can improve food due to the characteristics previously described. For example, the modified starch can be used as a raw material for food, and can be used for the object of improving the sensation of melting in the mouth or improving smoothness. When the modified starch is used as a food material, i.e., as a food additive, there is no particular limitation as to the amount thereof to be added, which should be decided as appropriate according to other raw materials or to the nature sought in the food to which the starch is added; for example, the starch can be added in such an amount as to constitute 0.1-99 mass% of the food raw material.

Cheese, chocolate, gummies, candy, creaming powder, flour paste, ice cream, cooked rice, fried rice, pilaf, processed foods made from seafood or meat, etc., are preferred as foods to which the modified starch of the present invention is added, and the modified starch of the present invention can be used as a substitute for comparatively high-priced foods such as seafood, livestock meat, dairy components, cacao mass, gelatin, etc.

Aside from food, the above-described characteristics also enable the modified starch of the present invention to be used as a base material for powderization and as raw material for binders, paper, building materials, and other chemical industrial products. Examples of binders include adhesives, binding agents, etc.; examples of paper include offset printing paper, cardboard, etc.; and examples of building materials include plasterboard, cement, etc. There is no particular limitation as to the amount of the modified starch to be added in these uses, which should be decided as appropriate according to the use and the other raw materials; for example, the starch can be added in such an amount as to constitute 0.1-99 mass% of the raw material.

When used as a base material for powderization, the modified starch of the present invention has low viscosity and satisfactory powderization efficiency due to the characteristics previously described. When used as an additive for a binder, the modified starch of the present invention can express high degrees of homogeneity and binding-ability due to the characteristics previously described. When used as an additive for making paper, the modified starch of the present invention has a high degree of solubility and can be mixed uniformly with other components due to the characteristics previously described. When used as an additive for building materials, the modified starch of the present invention can mix uniformly with other components due to the characteristics previously described.

A means for preparing the modified starch of the present invention shall be described below. The description below is, however, not meant to limit the technical scope of the modified starch of the present invention to the preparation means.

The method for preparing the modified starch described above involves adding a halogenated salt to a starch and modifying the starch by heating. There are no particular limitations as to the modifying by heating method as long as a modified starch having the desired performance is obtained, but the starch is preferably heated in a dry reaction from the standpoints of production efficiency and environmental load. The term "dry reaction" in the present description means that the starch is modified by heating in less than 40 mass% moisture. There is also no particular limitation as to the heating temperature and heating time, but it is necessary to modify the starch by heating so that the peak viscosity ratio of the obtained modified starch is 5% or less and the difference between the maximum particle diameter and the minimum particle diameter is 2 *µ*m or less. By modifying the starch by heating so that the modified starch satisfies the parameters described above, it is possible to obtain a modified starch of which the particle diameter distribution waveform has a single peak and the starch particle diameter is uniform. Due to the intensifying of the modifying by heating conditions by increasing the added amount of the halogenated salt, increasing the heating temperature, lowering the pH during heating, or increasing the heating time, there is a tendency for the peak viscosity ratio of the modified starch to decrease. Additionally, the difference between the maximum particle diameter and the minimum particle diameter of the modified starch decreases also due to the modifying by heating conditions being intensified, and when the modifying by heating conditions exceed a certain range, there is a tendency for the difference between the maximum particle diameter and the minimum particle diameter to conversely increase. The degree to which the peak viscosity ratio decreases also differs somewhat depending on the type of halogenated salt added. Consequently, using the above-described points as indicators, the desired modified starch can be obtained by adjusting, as appropriate, the modifying by heating conditions: type of halogenated salt used, added amount thereof, heating temperature, pH, and heating time.

The starch to be a raw material for preparing the modified starch described above is not particularly limited as long as the starch is used in normal food or chemical products; corn starch, tapioca, potato starch, sweet potato starch, wheat starch, sago starch, bean starch, etc., can be used, and any type of ones can be used as like originated from non-glutinous species, glutinous species (waxy), high amylose species, etc.. A combination of a plurality of starches may also be used. Various processed starches can also be used for the starch serving as a raw material. Specifically, the starch used may be subjected to: a chemical modification, namely oxidation, esterification, etherification, or cross-linking; processing, namely pregelatinization, granulation, moist heat treatment, ball milling, fine grinding, heating, hot water treatment, bleaching, sterilization, acid treatment, alkali treatment, and enzyme treatment; or two or more of these treatments.

There are no particular limitations as to the type of halogenated salt used to prepare the modified starch described above if the salt can be industrially procured; possible examples include chloride salts (iron chloride (II, III), calcium chloride, magnesium chloride, ammonium chloride, lithium chloride, sodium chloride, etc.), bromide salts (iron bromide (II, III), calcium bromide, magnesium bromide, ammonium bromide, lithium bromide, sodium bromide, etc.), iodide salts (iron iodide (II), calcium iodide, magnesium iodide, ammonium iodide, lithium iodide, sodium iodide, etc.), and the like. Chloride salts are preferred from the standpoint of the effect thereof, calcium chloride, ammonium chloride, and magnesium chloride being more preferred, and calcium chloride is particularly preferred from the standpoint of particle diameter distribution and quality of taste. Multiple different types of halogenated salts may be combined.

In the preparation of the modified starch described above, the modifying by heating conditions should be adjusted as appropriate using the peak viscosity ratio and the difference between the maximum particle diameter and the minimum particle diameter as indicators as described above, but for example, when calcium chloride is added, the ratio of calcium chloride added per 100 parts by mass of the starch is 0.8-15 parts by mass and the starch can be modified by heating at 50-200°C for 0.5 hours to 30 days; when ammonium chloride is added, the ratio of ammonium chloride added per 100 parts by mass of the starch is 0.1-5 parts by mass and the starch can be modified by heating at 50-200°C for 0.5 hours to 30 days; and when magnesium chloride is added, the ratio of magnesium chloride added per 100 parts by mass of the starch is 0.1-8 parts by mass and the starch can be modified by heating at 50-200°C for 0.5 hours to 30 days.

Having been modified by heating, the modified starch can be rinsed and dried as necessary. Specifically, there are cases in which the modified starch, depending on the use thereof, has an adverse effect on the taste of the food and other disadvantages due to remaining halogenated salt, and the modified starch is therefore preferably rinsed and dried to remove the remaining salt. Rinsing and drying may not need to be performed depending on the use, in which case production costs can be further minimized proportionally.

Pregelatinization or another type of processing may then be carried out after the preparation of the modified starch described above. This processing can be performed in accordance with normal starch-processing methods; possible examples of pregelatinization methods include drum drying, spray drying, extrusion, etc.

### EXAMPLES

Examples are given below to describe the details of the present invention, but the present invention is not limited to these examples.

### (Analysis of sample)

In the test examples presented below, (1) RVA peak viscosity, (2) particle diameter distribution waveform (number of peaks), (3) average particle diameter, and (4) maximum particle diameter and minimum particle diameter of the individual samples were measured using the procedures described below.

### (1) RVA peak viscosity

Measured as described below using a rapid visco analyzer (RVA) (Perten Instruments).

The samples were dispersed in water to a concentration of 10 mass% to prepare 30 g of a dispersion, the dispersion was held at 50°C for 1 min while being stirred with a paddle at a speed of 160 rpm, the temperature was continuously raised from 50°C to 95°C over a period of 3 min 42 sec, the temperature was held at 95°C for 2 min 30 sec, the dispersion was continuously cooled to 50°C over a period of 3 min 48 sec, and the temperature was held at 50°C for 2 min, and under which conditions the peak viscosity (highest viscosity) was measured.

### (2) Particle diameter distribution waveform (number of peaks)

The particle diameter distribution was analyzed as described below using a dynamic light scattering measurement device (ELSZ-2000ZS (Otsuka Electronics Co., Ltd.)).

Immediately after being measured with a rapid visco analyzer (RVA), the paste liquid was diluted with distilled water until the solid concentration was 0.02 mass%, thus preparing a dispersion, which was poured into a glass standard cell, and measurement was carried out in a condition where the accumulation is 25 times and at room temperature, while using the values of solvent refractive index, viscosity, and dielectric constant for water. The number of peaks was determined from the particle diameter distribution waveform thus obtained.

### (3) Average particle diameter

The particle diameter measurement in section (2) above was calculated by cumulant analysis to determine the average particle diameter.

### (4) Maximum particle diameter and minimum particle diameter

The maximum particle diameter and the minimum particle diameter were determined from the particle diameter distribution waveform obtained by the particle diameter distribution measurement in section (2) above.

### [Test example 1] (test groups on corn starch source)

Calcium chloride was added to 20 parts by mass of water in the percentages (relative to the mass of the paired starch) shown in table 1, and was dissolved in advance. The aqueous solution of calcium chloride was added to 100 parts by mass of corn starch, and the starch was stirred to homogeneity using a blender. After stirring, the starch was transferred to a stainless steel tray, and spread to a thickness of 10 mm or less (the moisture content in the starch was 30 mass% in each sample). An aluminum tray was transferred to an oven preheated to 130°C, and the modifying by heating treatment was carried out as shown in table 1. After the modifying by heating treatment, the starch was allowed to cool at room temperature for 30 min. After the cooling, 2000 parts by mass of water was added to 100 parts by mass of a dry mass of the starch, and the starch was rinsed, dehydrated, and dried to obtain the modified starches in comparative sample 1-2 and samples 1-1 to 1-9.

The modified starches thus obtained were analyzed according to the measurements described above. The results are shown in table 1. FIG. 1 shows the particle diameter distribution waveforms obtained for the modified starches of sample 1-2, sample 1-6, and comparative sample 1-1 (unmodified corn starch), which are typical examples of the evaluated samples.

[Table 1]

**Table 1**

| | Added salt | Add ratio (%) | Modifying time | Modifying temp. | Peak viscosity (mPa•s) | A: min. particle diameter (nm) | B: max. particle diameter (nm) | Average particle diameter (nm) | Peak viscosity ratio (%) | B-A (nm) | No. of peaks |
|---|---|---|---|---|---|---|---|---|---|---|---|
| Comp. sample 1-1 | - | - | - | - | 3513 | 31.3 | 10000.0 | 1240.3 | 100 | 9968.7 | 4 |
| Comp. sample 1-2 | CaCl₂ | 0.69 | 5 hr | 135°C | 69 | 152.0 | 6892.6 | 298.4 | 1.96 | 6740.6 | 3 |
| Sample 1-1 | CaCl₂ | 1.00 | 3 hr | 130°C | 91 | 16.3 | 559.1 | 258.4 | 2.59 | 542.8 | 1 |
| Sample 1-2 | CaCl₂ | 2.00 | 3 hr | 130°C | 65 | 115.0 | 509.4 | 221.2 | 1.85 | 394.4 | 1 |
| Sample 1-3 | CaCl₂ | 3.00 | 3 hr | 130°C | 64 | 138.5 | 559.1 | 255.4 | 1.82 | 420.6 | 1 |
| Sample 1-4 | CaCl₂ | 5.00 | 3 hr | 130°C | 114 | 183.1 | 1873.8 | 479.0 | 3.25 | 1690.7 | 1 |
| Sample 1-5 | CaCl₂ | 3.00 | 10 min | 130°C | 3381 | 28.5 | 10000.0 | 1090.9 | 96.24 | 9971.5 | 4 |
| Sample 1-6 | CaCl₂ | 3.00 | 20 min | 130°C | 3354 | 65.8 | 10000.0 | 3069.0 | 95.47 | 9934.2 | 2 |
| Sample 1-7 | CaCl₂ | 3.00 | 30 min | 130°C | 3258 | 28.5 | 10000.0 | 1342.0 | 92.74 | 9971.5 | 3 |
| Sample 1-8 | CaCl₂ | 3.00 | 1 hr | 130°C | 94 | 26.0 | 9111.6 | 510.5 | 2.68 | 9085.6 | 3 |
| Sample 1-9 | CaCl₂ | 3.00 | 2 hr | 130°C | 22 | 41.3 | 673.4 | 310.2 | 0.63 | 632.1 | 1 |

As is shown in table 1, adding calcium chloride and performing the modifying by heating treatment to a certain extent yielded a modified starch in which the peak viscosity ratio to that of unmodified starch (comparative sample 1-1), which is raw corn starch, was 5% or less and B-A was 2000 nm or less. Modified starch satisfying these parameters had a particle diameter distribution waveform exhibiting a single peak (see FIG. 1). Modified starch not satisfying the parameters that the peak viscosity ratio to that of unmodified starch (comparative sample 1-1) be 5% or less and B-A be 2000 or less did not have a particle diameter distribution waveform exhibiting a single peak (see FIG. 1). Particularly, comparative sample 1-2, which is a modified starch disclosed in an example in Japanese Laid-Open Patent Application No. 2001-275585, had a peak viscosity ratio of 5% or less, but B-A was a value greater than 2000 nm and the particle diameter distribution waveform exhibited more than a single peak. Consequently, the modified starch disclosed in Japanese Laid-Open Patent Application No. 2001-275585 was shown to not satisfy the parameters of the present invention.

### [Test example 2] (test groups on waxy corn starch source)

Calcium chloride was added to 20 parts by mass of water in the percentages (relative to the mass of the paired starch) shown in table 2, and was dissolved in advance. The aqueous solution of calcium chloride was added to 100 parts by mass of waxy corn starch, and the starch was stirred to homogeneity using a blender. After stirring, the starch was transferred to a stainless steel tray, and spread to a thickness of 10 mm or less (the moisture content of the starch was 30 mass% in each sample). An aluminum tray was transferred to an oven preheated to 130°C, and the modifying by heating treatment was carried out as shown in table 2. After the modifying by heating treatment, the starch was allowed to cool at room temperature for 30 min. After the cooling, 2000 parts by mass of water were added to 100 parts by mass of a dry mass of the starch, and the starch was rinsed, dehydrated, and dried to obtain the modified starches in comparative sample 2-2, comparative sample 2-3, and samples 2-1 to 2-4.

The obtained modified starches were analyzed according to the measurements described above. The results are shown in table 2.

**Table 2**

| | Added salt | Add ratio (%) | Modifying time | Modifying temp. | Peak viscosity (mPa•s) | A: min. particle diameter (nm) | B: max. particle diameter (nm) | Average particle diameter (nm) | Peak viscosity ratio (%) | B-A (nm) | No. of peaks |
|---|---|---|---|---|---|---|---|---|---|---|---|
| Comp. sample 2-1 | - | - | - | - | 4463 | 31.3 | 2477.1 | 247.4 | 100 | 2445.8 | * |
| Comp. sample 2-2 | - | - | 1 hr | 130°C | 3638 | 28.5 | 3274.5 | 240.5 | 81.51 | 3246.0 | 4 |
| Comp. sample 2-3 | - | - | 2 hr | 130°C | 3113 | 1.0 | 2477.1 | 210.3 | 69.75 | 2476.1 | 2 |
| Sample 2-1 | CaCl₂ | 1.0 | 1 hr | 130°C | 80 | 1.0 | 464.2 | 108.0 | 1.79 | 463.2 | 1 |
| Sample 2-2 | CaCl₂ | 1.0 | 2 hr | 130°C | 34 | 19.6 | 351.1 | 72.8 | 0.76 | 331.5 | 1 |
| Sample 2-3 | CaCl₂ | 2.0 | 3 hr | 130°C | 7 | 13.5 | 220.5 | 51.7 | 0.16 | 207.0 | 1 |
| Sample 2-4 | CaCl₂ | 3.0 | 3 hr | 130°C | 54 | 21.5 | 613.6 | 72.9 | 1.21 | 592.1 | 1 |

| | | | | | | | | | | | |
|---|---|---|---|---|---|---|---|---|---|---|---|
| *peaks were too broad for number to be measured | | | | | | | | | | | |

As is shown in table 2, by adding calcium chloride and performing the modifying by heating treatment to a certain extent, a modified starch was obtained in which the peak viscosity ratio to that of unmodified starch (comparative sample 2-1), which is raw corn starch, was 5% or less and B-A was 2000 nm or less. Modified starch satisfying these parameters had a particle diameter distribution waveform exhibiting a single peak. Modified starch subjected to the modifying treatment without the addition of calcium chloride (comparative samples 2-2 and 2-3) did not satisfy the parameters and did not have a particle diameter distribution waveform exhibiting a single peak.

### [Test example 3] (test groups on tapioca source)

Calcium chloride was added to 20 parts by mass of water in the percentages (relative to the mass of the paired starch) shown in table 3, and was dissolved in advance. The aqueous solution of calcium chloride was added to 100 parts by mass of tapioca starch, and the starch was stirred to homogeneity using a blender. After stirring, the starch was transferred to a stainless steel tray, and spread to a thickness of 10 mm or less (the moisture content in the starch was 30 mass% in each sample). An aluminum tray was transferred to an oven preheated to 130°C, and the modifying by heating treatment was carried out as shown in table 3. After the modifying by heating treatment, the starch was allowed to cool at room temperature for 30 min. After the cooling, 2000 parts by mass of water were added to 100 parts by mass of a dry mass of the starch, and the starch was rinsed, dehydrated, and dried to obtain the modified starches in comparative sample 3-2 and samples 3-1 and 3-2.

The obtained modified starches were analyzed according to the measurements described above. The results are shown in table 3.

**Table 3**

| | Added salt | Add ratio (%) | Modifying time | Modifying temp. | Peak viscosity (mPa•s) | A: min. particle diameter (nm) | B: max. particle diameter (nm) | Average particle diameter (nm) | Peak viscosity ratio (%) | B-A (nm) | No. of peaks |
|---|---|---|---|---|---|---|---|---|---|---|---|
| Comp. sample 3-1 | - | - | - | - | 4737 | 26.0 | 2718.6 | 2840.0 | 100 | 2692.6 | 3 |
| Comp. sample 3-2 | - | - | 3 hr | 130°C | 3101 | 23.6 | 5214.0 | 300.4 | 65.46 | 5190.4 | 3 |
| Sample 3-1 | CaCl₂ | 1.0 | 3 hr | 130°C | 101 | 23.6 | 8302.2 | 130.0 | 2.13 | 8278.6 | 2 |
| Sample 3-2 | CaCl₂ | 5.0 | 3 hr | 130°C | 67 | 23.6 | 673.4 | 115.6 | 1.41 | 649.8 | 1 |

As is shown in table 3, by adding calcium chloride and performing the modifying by heating treatment to a certain extent, a modified starch was obtained in which the peak viscosity ratio to that of unmodified starch (comparative sample 3-1), which is raw tapioca, was 5% or less and B-A was 2000 nm or less. Modified starch satisfying these parameters had a particle diameter distribution waveform exhibiting a single peak. Modified starch not satisfying the parameters that the peak viscosity ratio to that of unmodified starch (comparative sample 3-1) be 5% or less and B-A be 2000 nm or less did not have a particle diameter distribution waveform exhibiting a single peak. Modified starch subjected to the modifying treatment without the addition of calcium chloride (comparative sample 3-2) similarly did not satisfy the parameters and did not have a particle diameter distribution waveform exhibiting a single peak.

### [Test example 4] (test groups with salt type changed)

Salts were added to 20 parts by mass of water to the percentages (relative to the mass of the paired starch) shown in table 4, and were dissolved in advance. Aqueous solutions of the salts were added to 100 parts by mass of corn starch, and the starch were stirred to homogeneity using a blender. After the stirring, the starch were transferred to a stainless steel tray, and spread to a thickness of 10 mm or less (the moisture content in the starch was 30 mass% in each sample). An aluminum tray was transferred to an oven preheated to 130°C, and the modifying by heating treatment was carried out as shown in table 4. After the modifying by heating treatment, the starch was allowed to cool at room temperature for 30 min. After the cooling, 2000 parts by mass of water were added to 100 parts by mass of a dry mass of the starch, and the starch was rinsed, dehydrated, and dried to obtain the modified starches in samples 4-1 to 4-9.

The obtained modified starches were analyzed according to the measurements described above. The results are shown in table 4.

**Table 4**

| | Added salt | Add ratio (%) | Modifying time | Modifying temp. | Peak viscosity (mPa•s) | A: min. particle diameter (nm) | B: max. particle diameter (nm) | Average particle diameter (nm) | Peak viscosity ratio (%) | B-A (nm) | No. of peaks |
|---|---|---|---|---|---|---|---|---|---|---|---|
| Comp. sample 4 | - | - | - | - | 3084 | 1.1 | 10000.0 | 1350.7 | 100 | 9998.9 | 4 |
| Sample 4-1 | NH₄Cl | 0.25 | 1 hr | 130°C | 250 | 23.6 | 10000.0 | 689.6 | 8.11 | 9976.4 | 4 |
| Sample 4-2 | NH₄Cl | 0.25 | 2 hr | 130°C | 100 | 79.2 | 10000.0 | 536.3 | 3.24 | 9920.8 | 3 |
| Sample 4-3 | NH₄Cl | 0.25 | 3 hr | 130°C | 36 | 17.9 | 351.1 | 269.7 | 1.17 | 333.2 | 1 |
| Sample 4-4 | NH₄Cl | 0.50 | 3 hr | 130°C | 88 | 152.0 | 1176.8 | 367.6 | 2.85 | 1024.8 | 1 |
| Sample 4-5 | NH₄Cl | 1.00 | 3 hr | 130°C | 42 | 183.1 | 739.1 | 339.8 | 1.36 | 556.0 | 1 |
| Sample 4-6 | NH₄Cl | 2.00 | 3 hr | 130°C | 27 | 183.1 | 739.1 | 362.8 | 0.88 | 556.0 | 1 |
| Sample 4-7 | MgCl₂ | 3.00 | 30 min | 130°C | 164 | 13.5 | 10000.0 | 479.3 | 5.32 | 9986.5 | 4 |
| Sample 4-8 | MgCl₂ | 3.00 | 1 hr | 130°C | 92 | 95.5 | 422.9 | 171.5 | 2.98 | 327.4 | 1 |
| Sample 4-9 | MgCl₂ | 3.00 | 2 hr | 130°C | 57 | 138.5 | 2257.0 | 563.4 | 1.85 | 2118.5 | 2 |

As is shown in table 4, by adding ammonium chloride or magnesium chloride and performing the modifying by heating treatment to a certain extent, a modified starch was obtained in which the peak viscosity ratio to that of unmodified starch (comparative sample 4), which is raw corn starch, was 5% or less and B-A was 2000 nm or less. Modified starch satisfying these parameters had a particle diameter distribution waveform exhibiting a single peak. Modified starch not satisfying the parameters that the peak viscosity ratio to that of unmodified starch (comparative sample 4) be 5% or less and B-A be 2000 or less did not have a particle diameter distribution waveform exhibiting a single peak.

From these results, it was confirmed that a modified starch satisfying the previously described parameters is obtained via the desired modifying treatment if a halogenated salt is used, the halogenated salt not being limited to calcium chloride.

### [Test Example 5] (flour paste)

A whole egg was put into a glass bowl, sugar was stirred in, after which milk protein, bovine milk, rapeseed oil, syrup, and citric acid were added and the ingredients were stirred with a whipper. The mixture was transferred to a mixer bowl and homogenized for 5 min at 5000 rpm by a homogenizer while being heated. Starch material was then added in small incremental amounts to the liquid and stirred to uniform dispersion, the dispersion was heated for 4-5 min at 90°C or more and boiled down to a yield rate of 90%, whereupon the dispersion was then removed from the heat source and vanilla oil was added. The obtained flour paste was vacuum-packaged and cooled in running water. The mix ratios of the raw materials are shown in table 5.

### [Table 5]

**Table 5**

| | Blend ratio |
|---|---|
| Starch material | 6.5 |
| Citric acid | 0.5 |
| Milk protein | 2.0 |
| Sugar | 10.0 |
| Whole egg | 5.0 |
| Syrup | 25.0 |
| Rapeseed oil | 15.0 |
| Bovine milk | 35.0 |
| Vanilla oil | 1.0 |
| Total | 100 |

Sample 1-3 (modified starch) prepared in test example 1, comparative sample 1-1 (unmodified corn starch), and an acetylated oxidized starch (TSK-13 (Nihon Shokuhin Kako Co., Ltd.)), which is a commercial low-viscosity starch, were used as the starch materials.

The obtained flour paste was subjected to a sensory evaluation after being produced (normal temperature) and kept in cold storage for 7 days. The sensory evaluation was performed by five panelists on the basis of the following criteria, and the averages of the evaluation points given by the panelists were calculated.

### <Melting in the mouth>

The flour paste was placed in the mouth and the sensation of melting in the mouth was evaluated on a scale of 1 to 6 (higher evaluation points equating to better melt-in-the-mouth sensation).

### <Smoothness>

The flour paste was placed in the mouth and the smoothness was evaluated on a scale of 1 to 6 (higher evaluation points equating to greater smoothness).

### <syneresis minimizing effect>

The syneresis-minimizing effect of the flour paste was evaluated on a scale of 1 to 4 (higher evaluation points equating to less syneresis). Syneresis does not occur immediately after production, and the syneresis-minimizing effect was therefore evaluated only for flour paste that had been put into cold storage.

Table 6 shows the sensory evaluation results for the flour paste to which the starch materials were added.

### [Table 6]

**Table 6**

| Starch material | Melt in the mouth | Smoothness | Syneresis minimizing effect |
|---|---|---|---|
| After production | | | |
| Sample 1-3 | 6.0 | 4.5 | - |
| Comp. sample 1-1 | 5.0 | 3.0 | - |
| Acetyl. ox. starch | 5.5 | 4.0 | - |

| After cold storage | | | |
|---|---|---|---|
| Sample 1-3 | 5.0 | 5.0 | 3.0 |
| Comp. sample 1-1 | 1.0 | 1.0 | 2.0 |
| Acetyl. ox. starch | 4.0 | 4.0 | 3.0 |

As is shown in table 6, a flour paste using the modified starch of sample 1-3 had melt-in-the-mouth sensation and smoothness immediately after being produced that was superior to a flour paste using unmodified corn starch (comparative sample 1-1). Performance was also superior to a commercial low-viscosity starch (acetylated oxidized starch). Furthermore, as was also seen in the evaluation after cold storage, the flour paste using the modified starch of sample 1-3 was markedly superior in terms of both melt-in-the-mouth sensation and smoothness to the flour paste using unmodified corn starch (comparative sample 1-1), and also had superior syneresis minimizing effect.

### [Test example 6] (gummy candy)

Gelatin and dissolving water were measured out, the gelatin was dissolved by being placed in hot water for 20 min, and syrup, superfine sugar, and the starch material (a paste liquid gelatinized in advance) were added to a pot and heated to 117°C. The bottom of the pot was cooled with water to adjust the liquid temperature to 100°C, the dissolved gelatin was stirred in, a citric acid solution, orange juice, and a flavoring were added, and the mixture was stirred for 3 min. The obtained gummy liquid was transferred into a vinyl bag for deaerating, the bag was left for 20 min in an 80°C oven, and the gummy liquid was deaerated. The deaerated gummy liquid was dispensed in 15 g each into a round silicon mold, corn starch was shaken from above while being filtered through a tea strainer, and the liquid was allowed to cool and solidify in a refrigerator. After cooling and solidifying overnight, the gummy was taken out of the mold. The blending ratios of the individual raw materials are shown in table 7.

### [Table 7]

**Table 7**

| | Blend ratio |
|---|---|
| Starch material | 3.0 |
| Water (for gelatinizing starch) | 15.0 |
| Gelatin | 3.0 |
| Water (for dissolving gelatin) | 8.0 |
| Syrup | 45.0 |
| Superfine sugar | 20.0 |
| Citric acid | 1.0 |
| Water (for dissolving citric acid) | 1.5 |
| Concentrated fruit juice | 3.0 |
| flavoring | 0.5 |
| Total | 100 |

Sample 1-3 (modified starch) prepared in test example 1, comparative sample 1-1 (unmodified corn starch), and an acetylated oxidized starch (TSK-13 (Nihon Shokuhin Kako Co., Ltd.)), which is a commercial low-viscosity starch, were used as the starch materials.

The obtained gummy was subjected to measurement of breaking load and sensory evaluation as described below. An evaluation of hardness and elastic force was performed by five panelists on the basis of the following criteria, the averages of the evaluation points given by the panelists were calculated, and an evaluation of workability was assessed by the manufacturer of the gummy on the basis of the following criteria.

### <Breaking load>

The ellipsoidal gummy was cut with a circle 3 cm in diameter and subjected to measurement. The measurement was taken using a creep meter (product name: YAMADEN REONER II CREEP METER RE2-33005B (Yamaden Co., Ltd.)) under the following conditions (*n* = 3).
Plunger: cutter back
Distortion rate setting: 300%
Load cell 200 N

### <Hardness>

The hardness of the gummy when chewed was evaluated on a scale of -3 to 3 with 7 levels (higher evaluation points equate to increased hardness), with 0 being a point of comparison to a case of not adding the starch sample (water is added instead of the starch).

### <Elasticity>

The elasticity of the gummy when chewed was evaluated on a scale of -3 to 3 with 7 levels (higher evaluation points equate to greater elasticity), with 0 being a point of comparison to a case of not adding the starch sample.

### <Workability>

The workability of the gummy during production was evaluated in three levels χ, O, and ⊚, on the basis of the following criteria.
χ: long boiling time, gummy solution is highly spinnable and difficult to pour into mold
O: somewhat short boiling time, gummy solution not very spinnable and is easy to pour into mold
⊚: short boiling time, gummy solution is not spinnable and very easy to pour into mold

Table 8 shows the results of measuring and evaluating the gummies to which the individual starch materials were added.

### [Table 8]

**Table 8**

| Starch material | Breaking load (N) | Hardness | Elasticity | Workability |
|---|---|---|---|---|
| Sample 1-3 | 19.9 | 2.6 | 1.5 | ⊚ |
| Comp. sample 1-1 | 8.2 | -0.5 | 1.7 | ○ |
| Acetylated oxidized starch | 15.0 | 2.3 | 0.5 | ⊚ |

As is shown in table 8, the gummy using the modified starch of sample 1-3 had particularly exceptional evaluation results for breaking load and hardness in comparison with the case of using unmodified corn starch (comparative sample 1-1), and also had exceptional workability. The gummy using the commercial low-viscosity starch (acetylated oxidized starch) had exceptional evaluation results for breaking load and hardness in comparison with the case of using unmodified corn starch (comparative sample 1-1), but had very poor elasticity.

### [Blending example 1] (seafood extract powder)

A seafood extract powder can be produced using the modified starch of the present invention as a base material for powderization, by adding the modified starch to water in the combinations of table 9, gelatinizing the mixture, subsequently adding seafood extract and powderizing the solution with a spray dryer.

### [Table 9]

**Table 9**

| | Blend ratio (mass%) |
|---|---|
| Seafood extract | 15.0 |
| Modified starch | 20.0 |
| Distilled water | 65.0 |

### [Blending example 2] (binder for ceiling tile board)

A binder for a ceiling tile board using the modified starch of the present invention as an additive can be obtained by mixing the modified starch (paste liquid form), a cross-linking agent, an accelerator, and a surfactant in the blends of table 10, spraying the mixed liquid onto a ceiling tile board using a sprayer, and allowing the liquid to dry.

### [Table 10]

**Table 10**

| | Blend ratio (mass%) |
|---|---|
| Modified starch | 65-70 (solid content) |
| Cross-linking agent | 25-30 |
| Accelerator | 2-5 |
| Surfactant | 0.1-0.3 |

### [Blend example 3] (coated paper)

Coated paper using the modified starch of the present invention as an additive can be obtained by adding the modified starch to water in the blends of table 11, gelatinizing the mixture, subsequently adding synthetic latex and heavy sodium carbonate to the paste liquid, coating stencil paper with the liquid mixture using a blade coater, and allowing the liquid to dry.

### [Table 11]

**Table 11**

| | Blend ratio (parts by mass) |
|---|---|
| Modified starch | 6.0 |
| Synthetic latex | 1.8 |
| Heavy calcium carbonate | 100.0 |
| Water | 70.0 |

### [Blend example 4] (building material)

A building material using the modified starch of the present invention as an additive can be obtained by mixing the modified starch (paste liquid form), vermiculite, and allophane in the blends of table 12 using a Hobart mixer, coating a calcium silicate board with the mixture to a thickness of 2 mm using roll coater method, and allowing the mixture to dry.

### [Table 12]

**Table 12**

| | Blend ratio (mass%) |
|---|---|
| Vermiculite | 40.0 |
| Modified starch | 20 (solid content) |
| Allophane | 40.0 |

## Claims

1. A modified starch of which a particle diameter distribution waveform exhibits a single peak, wherein a 10 mass% paste liquid of the modified starch has an RVA peak viscosity that is 5% or less of the RVA peak viscosity of an unmodified starch serving as a raw material, and the difference between the maximum particle diameter and the minimum particle diameter is 2 *µ*m or less.

2. The modified starch according to claim 1, the average particle diameter being 1 *µ*m or less.

3. A food additive comprising the modified starch according to claim 1 or 2.

4. A food texture improvement agent comprising the modified starch according to claim 1 or 2.

5. A base material for powderization comprising the modified starch according to claim 1 or 2.

6. A binder additive comprising the modified starch according to claim 1 or 2.

7. A paper-making additive comprising the modified starch according to claim 1 or 2.

8. A building material additive comprising the modified starch according to claim 1 or 2.

9. A method for producing a modified starch in which a halogenated salt is added to a starch and a modifying by heating treatment is performed, wherein the modifying by heating treatment is performed so that the obtained modified starch of which a particle diameter distribution waveform exhibits a single peak,_a 10 mass% paste liquid of the obtained modified starch has an RVA peak viscosity that is 5% or less of the RVA peak viscosity of an unmodified starch to be a raw material, and the difference between the maximum particle diameter and the minimum particle diameter is 2 *µ*m or less.

10. The production method according to claim 9, the modifying by heating treatment being performed so that the average particle diameter of the obtained modified starch is 1 *µ*m or less.

11. The method for producing a modified starch according to claim 9 or 10, 0.1-20 parts by mass of the halogenated salt being added per 100 parts by mass of the starch.

12. The method for producing a modified starch according to any one of claims 9 to 11, the halogenated salt being one or more selected from the group consisting of iron chloride (II, III), calcium chloride, magnesium chloride, ammonium chloride, lithium chloride, sodium chloride, iron bromide (II, III), calcium bromide, magnesium bromide, ammonium bromide, lithium bromide, sodium bromide, iron iodide (II), calcium iodide, magnesium iodide, ammonium iodide, lithium iodide, and sodium iodide.

13. The method for producing a modified starch according to any one of claims 9 to 12, the halogenated salt being calcium chloride.

14. The method for producing a modified starch according to any one of claims 9 to 13, the modifying by heating treatment being performed at 50-200°C for 0.5 hours to 30 days.

15. The method for producing a modified starch according to any one of claims 9 to 14, pregelatinization also being performed after the modifying by heating treatment.

## Patentansprüche

1. Modifizierte Stärke, deren Wellenform einer Partikeldurchmesserverteilung eine einzige Spitze vorweist, wobei eine 10 Ma.-% Pasten-Flüssigkeit der modifizierten Stärke eine RVA-Spitzenviskosität aufweist, die 5% oder weniger von der RVA-Spitzenviskosität einer unmodifizierten Stärke ausmacht, die als Rohstoff dient, und die Differenz zwischen dem maximalen Partikeldurchmesser und dem minimalen Partikeldurchmesser 2 µm oder weniger ist.

2. Modifizierte Stärke nach Anspruch 1, wobei der durchschnittliche Partikeldurchmesser 1 µm oder weniger ist.

3. Lebensmittelzusatz, umfassend die modifizierte Stärke nach Anspruch 1 oder 2.

4. Texturverbesserungsmittel für Lebensmittel, umfassend die modifizierte Stärke nach Anspruch 1 oder 2.

5. Pulverisierungsgrundstoff, umfassend die modifizierte Stärke nach Anspruch 1 oder 2.

6. Bindemittelzusatz, umfassend die modifizierte Stärke nach Anspruch 1 oder 2.

7. Papierfertigungszusatz, umfassend die modifizierte Stärke nach Anspruch 1 oder 2.

8. Baumaterialzusatz, umfassend die modifizierte Stärke nach Anspruch 1 oder 2.

9. Verfahren zum Herstellen einer modifizierten Stärke, bei dem einer Stärke ein Halogensalz zugesetzt wird, und eine Modifizierung durch Wärmebehandlung durchgeführt wird, wobei die Modifizierung durch Wärmebehandlung durchgeführt wird, sodass die erhaltene modifizierte Stärke, deren Wellenform einer Partikeldurchmesserverteilung eine einzige Spitze vorweist, eine 10 Ma.-% Pasten-Flüssigkeit der modifizierten Stärke eine RVA-Spitzenviskosität aufweist, die 5% oder weniger von der RVA-Spitzenviskosität einer unmodifizierten Stärke ausmacht, um Rohstoff zu sein, und die Differenz zwischen dem maximalen Partikeldurchmesser und dem minimalen Partikeldurchmesser 2 µm oder weniger ist.

10. Herstellungsverfahren nach Anspruch 9, wobei die Modifizierung durch Wärmebehandlung durchgeführt wird, sodass der durchschnittliche Partikeldurchmesser 1 µm oder weniger ist.

11. Verfahren zum Herstellen einer modifizierten Stärke nach Anspruch 9 oder 10, wobei 0,1-20 Massenteile des Halogensalzes je 100 Massenteilen der Stärke zugesetzt werden.

12. Verfahren zur Herstellung einer modifizierten Stärke nach einem der Ansprüche 9 bis 11, wobei das Halogensalz eines oder mehr ist, ausgewählt aus der Gruppe, bestehend aus Eisenchlorid (II, III), Calciumchlorid, Magnesiumchlorid, Ammoniumchlorid, Lithiumchlorid, Natriumchlorid, Eisenbromid (II, III), Calciumbromid, Magnesiumbromid, Ammoniumbromid, Lithiumbromid, Natriumbromid, Eiseniodid (II), Calciumiodid, Magnesiumiodid, Ammoniumiodid, Lithiumiodid, und Natriumiodid.

13. Verfahren zur Herstellung einer modifizierten Stärke nach einem der Ansprüche 9 bis 12, wobei das Halogensalz Calciumchlorid ist.

14. Verfahren zur Herstellung einer modifizierten Stärke nach einem der Ansprüche 9 bis 13, wobei die Modifizierung durch Wärmebehandlung bei 50-200°C 0,5 Stunden bis 30 Tage lang durchgeführt wird.

15. Verfahren zur Herstellung einer modifizierten Stärke nach einem der Ansprüche 9 bis 14, wobei nach der Modifizierung durch Wärmebehandlung auch Vorgelatinierung durchgeführt wird.

## Revendications

1. Amidon modifié dont une forme d'onde de répartition de diamètre de particule présente un pic unique, dans lequel un liquide pâteux de 10 % en masse de l'amidon modifié possède une viscosité maximale RVA inférieure ou égale à 5 % de la viscosité maximale RVA d'un amidon non modifié servant de matière première, et la différence entre le diamètre de particule maximal et le diamètre de particule minimal est inférieur ou égal à 2 µm.

2. Amidon modifié selon la revendication 1, le diamètre particulaire moyen étant inférieur ou égal à 1 µm

3. Additif alimentaire comprenant l'amidon modifié selon la revendication 1 ou 2.

4. Agent d'amélioration de la texture des aliments comprenant l'amidon modifié selon la revendication 1 ou 2.

5. Matériau de base pour la réduction en poudre comprenant l'amidon modifié selon la revendication 1 ou 2.

6. Additif pour agent agglomérant comprenant l'amidon modifié selon la revendication 1 ou 2.

7. Additif pour la fabrication de papier comprenant l'amidon modifié selon la revendication 1 ou 2.

8. Additif pour matériau de construction comprenant l'amidon modifié selon la revendication 1 ou 2.

9. Procédé de production d'un amidon modifié dans lequel un sel halogéné est ajouté à un amidon et une modification est réalisée par traitement thermique, dans lequel la modification par traitement thermique est réalisée de sorte que l'amidon modifié ainsi obtenu dont une longueur d'onde de répartition de diamètre de particule présente un pic unique, un liquide pâteux de 10 % en masse de l'amidon modifié ainsi obtenu possède une viscosité maximale RVA inférieure ou égale à 5 % de la viscosité maximale RVA d'un amidon non modifié étant une matière première, et la différence entre le diamètre de particule maximal et le diamètre de particule minimal est inférieur ou égal à 2 µm.

10. Procédé de production selon la revendication 9, la modification par traitement thermique étant réalisée de sorte que le diamètre particulaire moyen de l'amidon modifié ainsi obtenu est inférieur ou égal à 1 µm.

11. Procédé de production d'un amidon modifié selon la revendication 9 ou 10, de 0,1 à 20 parties en masse du sel halogéné étant ajoutée(s) pour 100 parties en masse de l'amidon.

12. Procédé de production d'un amidon modifié selon l'une quelconque des revendications 9 à 11, le sel halogéné étant l'un ou plusieurs des éléments choisis parmi le groupe consistant en chlorure de fer (II, III), chlorure de calcium, chlorure de magnésium, chlorure d'ammonium, chlorure de lithium, chlorure de sodium, bromure de fer (II, III), bromure de calcium, bromure de magnésium, bromure d'ammonium, bromure de lithium, bromure de sodium, iodure de fer (II), iodure de calcium, iodure de magnésium, iodure d'ammonium, iodure de lithium et iodure de sodium.

13. Procédé de production d'un amidon modifié selon l'une quelconque des revendications 9 à 12, le sel halogéné étant du chlorure de calcium.

14. Procédé de production d'un amidon modifié selon l'une quelconque des revendications 9 à 13, la modification par traitement thermique étant réalisé à une température allant de 50 à 200 °C pendant 0,5 heure à 30 jours.

15. Procédé de production d'un amidon modifié selon l'une quelconque des revendications 9 à 14, la prégélatinisation étant également réalisée après la modification par traitement thermique.
